# EUROPEAN PATENT APPLICATION

(11) **EP 2 849 297 A2**
(43) Date of publication of application: **18.03.2015**
(21) Application number: 14184037.1
(22) Date of filing: 09.09.2014
(51) Int. Cl.: H02G 3/04

(54) **Fire protection duct for electrical cables**

(30) Priority: 12.09.2013 FI 20135920
(71) Applicant: Pipe-Modul Oy, 50150 Mikkeli (FI)
(72) Inventor: Partanen, Vesa, 50100 Mikkeli (FI)
(74) Representative: Berggren Oy Ab

(57) **Abstract**

According to one exemplary embodiment, the application relates to a fire protection duct (10), which is intended for electrical cables. The fire protection duct (10) comprises a bottom member (12) and a cover member (14), both including an outer shell (16b, 16d) and a first insulation layer adapted against an inner surface of the outer shell (16b, 16d) for isolating electrical cables to be installed inside the fire protection duct (10) from heat generated by a possible fire. In addition, at least the bottom member (12) includes a flat portion (32) and side portions (34a1, 34c1). Inside the fire protection duct (10) is attached a supporting panel (24), which comprises a plurality of supporting points (26) for fixing the electrical cables, and a second insulation layer included inside the fire protection duct (10) is adapted to be installed on top of a junction (30c) between the bottom member (12) and the cover member (14) inside the fire protection duct (10) for insulating the junction (30a, 30c) of the bottom member (12) and the cover member (14). The supporting panel (24) comprises at least one deflected plate, which makes up the fire protection duct's (10) flat portion (32d) and a supporting panel surface continuous at least partially over the inner surfaces of the side portions (34a1, 34c1) for strengthening the fire protection duct (10).

## Description

### Technical field

The application relates generally to a fire protection duct intended for electrical cables.

### Background

Electrical cables are generally coated with plastic, which is highly fusible or flammable in the event of a fire. Fire spreads easily along electrical cables to various parts of a building, making it important to protect the electrical cables with a separate fire protection duct. According to general fire safety regulations, the maximum internal temperature in a fire protection duct must not exceed 180°C after the fire has continued for 30 minutes and after the temperature outside the fire protection duct has risen to a maximum of 850°C.

One prior known solution for protecting electrical cables has been presented in Utility model publication DE 20023142 U1, in which the cables are placed in an insulated fire protection channel on top of corrugation crests.

Another prior known solution is a fire protection duct manufactured by Rehau AG under brand name Rauthermo, in which the electrical cables are placed in an insulated fire protection duct on top of shelves.

A problem with both of the aforesaid fire protection ducts is that the electrical cables are present in the fire protection duct on top of each other as electrical cable bundles. Hence, the electrical cables are susceptible to heating caused by the current traveling therein. In addition the electrical cables are loose in fire protection enclosures without any attachment, which is a poor solution also in terms of space utilization.

A third prior known solution for protecting electrical cables is presented in patent US 5,391,840, in which the fire protection duct includes a supporting bracket for fixing the electrical cables. However, a problem with this solution is poor thermal insulation.

### Summary

One objective of the invention is to eliminate problems of the prior known fire protection ducts.

It is a further objective to reduce the heating of electrical cables by fixing the same in a fire protection duct apart from each other. Another further objective is to provide an economically attractive fire protection duct assembly, which nevertheless affords a sufficient insulation capacity. A still further objective is to bolster a fire protection duct for enabling the fire protection duct to better withstand handling in transport and/or installation operations and to more effectively prevent a collapse of the structure as a result of fire-generated heat.

One objective of the invention is attained with a fire protection duct of claim 1.

The fire protection duct according to one embodiment, which is intended for electrical cables, includes a bottom member and a cover member, both comprising an outer shell and a first insulation layer adapted against an inner surface of the outer shell for insulating electrical cables to be installed inside the fire protection duct from heat generated by a possible fire. At least the bottom member includes a flat portion and side portions. Inside the fire protection duct is fitted a supporting panel, comprising a plurality of supporting points for mounting electrical cables, and a second insulation layer included inside the fire protection duct is adapted to be installed on top of a junction between the bottom member and the cover member inside the fire protection duct for insulating the junction of the bottom member and the cover member. The supporting panel comprises at least one deflected plate, which makes up the flat portion of the fire protection duct and a supporting panel surface continuous at least partially over the inner surfaces of the side portions for strengthening the fire protection duct.

Other embodiments are presented in dependent claims.

### Brief description of the figures

Exemplary embodiments of the invention will be explained more precisely in a detailed description of the figures with reference to the accompanying figures, in which
- figs. 1a-1b: show overall views of a fire protection duct with a cover member secured and opened, respectively,
- figs. 2a-2d: show various embodiments for fire protection duct insulation in cross-sectional views, some of which depict the cover member secured and some opened, and
- fig. 3: shows in more detail a supporting panel implementation for the bottom member of a fire protection duct.

### Detailed description of the figures

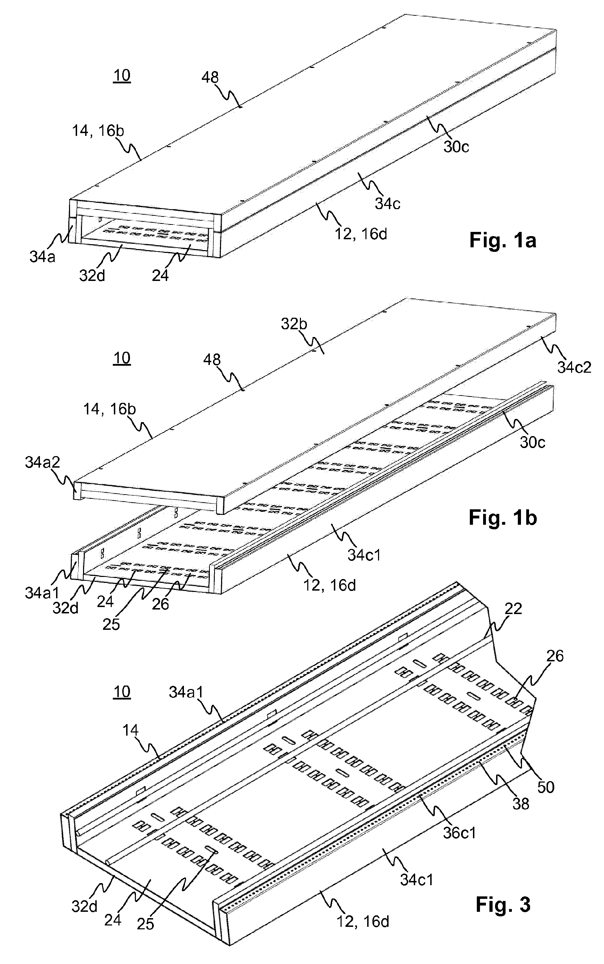

Fig. 1 a shows a fire protection duct 10 made up of a bottom member 12 and a cover member 14 attached thereto. The fire protection duct 10 is for example rectangular shaped and, in use, will be mounted by a flat portion 32d of the bottom member 12 on a wall, ceiling, or floor. In shaft structures, the attachment can be made for example to stair landings.

Dimensions for the fire protection duct 10 can be for example as follows: width 350 mm, 400 or 430 mm, height 120 mm, and length 2000 mm. Alternatively, the fire protection duct can also be manufactured in other width, height, and length dimensions with a possibility of considerable variations according to intended use.

Fig. 1b shows an opened fire protection duct 10 with the cover member 14 lifted off the bottom member 12. The cover member 14 can be fastened to the bottom member 12 co-directionally with side portions 34a2, 34c2 of the cover member 14 by means of fastening elements (not shown) extending through the side portions 34a2, 34c2 from the direction of a flat portion 32b of the cover member 14. The fastening elements can be for example wood screws, which are concealed with cover caps for a visual appearance of the fire protection duct. An outer shell 16b is provided with holes 48 for the fastening elements. For providing a support for electrical cables 22, the fire protection duct 10 has its bottom member 12 fitted with a continuous supporting panel 24 in a surface to surface relationship with at least a flat portion 32d and provided with supporting points 26.

The supporting panel 24 present on the bottom member 12 consists of a single continuous plate, for example a steel plate. Alternatively, the supporting panel 24 can be constructed from several plates, which are attached for example by welding securely to each other or placed as separate pieces in contact with each other on the bottom member 12 and secured to the fire protection duct 10 in a way to make up a supporting panel surface continuous in a lengthwise direction of the fire protection duct 10.

The supporting panel 24 is provided with oval fastening holes 25, whereby attachment of the fire protection duct 10 for example to a wall, ceiling, or floor takes place through fastening holes (not shown in the figures) included in the bottom member 12 and through the supporting panel's fastening holes 25 with fastening elements, for example screws or bolts.

The fire protection duct 10 withstands a fire, in which the external temperature rises to as high as 850°C, for at least 30 minutes, the internal temperature of the fire protection duct 10 rising during this period to less than 180°C. The fire protection duct 10 is particularly intended for various electrical cables 22, but it is also useful for example for water pipes or the like.

The fire protection ducts 10 between various spaces can be manufactured modularly from various sections of the fire protection duct 10, which are connected together. In all sections, however, the fire protection duct 10 has the same basic structure with possible variations only in dimensions and shapes. The various shapes may include for example angle pieces, T branches and the like. At junctions between separate sections of the fire protection duct 10, around the fire protection duct 10 are added separate fire protection bands to protect the junctions. As an additional or optional solution, it is possible to use at the junctions an expanding fire retardant agent.

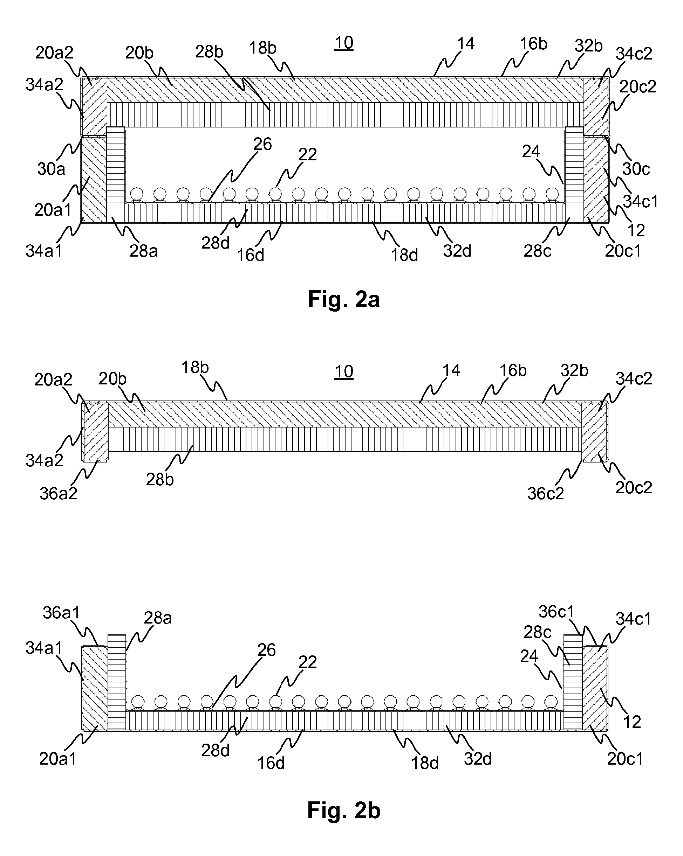

Figs. 2a and 2b show one embodiment of the fire protection duct 10 in cross-sectional views, wherein fig. 2a depicts a cover member 14 secured to a bottom member 12 and fig. 2b shows the same opened.

Both the bottom member 12 and the cover member 14 are similar in construction. Both include an outer shell 16b, 16d made for example from zinc-plated sheet metal, for example zinc-plated steel sheet or some other metal plate, which is given a substantially-U-shaped design. Alternatively, it is also possible to use a steel sheet electroplated with zinc. Inside the outer shell 16b, 16d against its inner surface 18b, 18d is installed a first insulation layer 20a1, 20a2, 20b, 20b1, 20c2, 20c1, which, as far as the cover member 14 is concerned, can be a continuous U-shaped structure or can be made from a flat portion 32b and side portions 34a1, 34a2, 34c2, 34c1, which are separate from each other and attached, for example by gluing, securely to each other. The first insulation layer 20a1, 20a2, 20b, 20b1, 20c2, 20c1 can be glued to the outer shell 16b, 16d and additionally screwed securely by means of plugs. The outer shell 16b, 16d is adapted to fold upon a free flank 36a1, 36a2, 36c2, 36c1 of the first insulation layer's 20a1, 20a2, 20b, 20b1, 20c2, 20c1 side portion 34a1, 34a2, 34c2, 34c1 both in the bottom member 12 and in the cover member 14.

At junctions 30a, 30c of the bottom member 12 and the cover member 14, inside the fire protection duct 10 are installed second insulation layers 28a, 28c extending lengthwise of the fire protection duct 10. These have a task of preventing heat from leaking in the event of fire by way of the junctions 30a, 30c into the interior of the fire protection duct 10. The second insulation layers 28a, 28c are attached to side portions 34a1, 34c1 of the bottom member 12 for example by means of gluing and screws and adapted to conceal the junction 30a, 30c of the bottom member 12 and the cover member 14 over the entire lengthwise extent of the fire protection duct 10.

In addition, to a first insulation layer 20b, 20b1, attached to the cover member's 14 flat portion 32b, can be secured an insulation board 20b2, 28b included in a second insulation layer 28a, 20b2, 28b, 28c, 28d, and on an inner surface 28d of the bottom member's 12 outer shell 16d is in turn mounted an insulation board 28d included in the second insulation layer 28a, 20b2, 28b, 28c, 28d.

The insulation boards 20b, 20b1, 20b2, 28b of the cover member's 14 flat portion 32b are installed in attachment with the side portions' 34a2, 34c2 insulation board 20a2, 20c2 in such way that the ends of the insulation boards 20b, 20b1, 20b2, 28b are at a junction substantially perpendicular to the insulation boards 20a2, 20c2. This arrangement is effective in preventing the penetration of heat through the side portions 34a2, 34c2 into the interior of the fire protection duct 10, since against the outer shell's 16b inner surface 18b at the side portions 34a2, 34c2 there is no continuous junction (connection joint) established as a result of the disposition of the insulation boards 20a2, 20b, 20b1, 20b2, 20c2, 28b, which leads directly into the interior of the fire protection duct 10 and enables easy penetration of heat therein along the junction. As can be seen from figs. 2a and 2b - and from other figures, as well - the continuous junctions, which are present at the ends of the insulation boards 20b, 20b1, 20b2, 28b and against the inner surface 18b of the outer shell 16b, extend against the insulation boards 20a1, 28a, 20c2, 28c of the bottom member 12, the penetration of heat into the interior of the fire protection duct 10 being thereby effectively obstructed.

In one embodiment of the fire protection duct 10, the insulation boards 20a2, 20c2, included in the first insulation layer 20a2, 20b, 20b1, 20c2 of the cover member's 14 side portions 34a2, 34c2, have one end thereof installed against the inner surface 18b of the cover member's 14 outer shell 16b serving as the fire protection duct's outer surface 32b, and at least one insulation board 20b, 20b1, 20b2, 28b of the cover member's 14 flat portion 32b is attached in a substantially perpendicular orientation between the insulation boards 20a2, 20c2 of the first insulation layer 20a2, 20b, 20b1, 20c2 of the cover member's 14 side portions 34a2, 34c2 against the inner surface thereof.

The bottom member's 12 insulation board 28d is installed in a similar fashion, such that its ends are in attachment with a junction and substantially perpendicular to the side portions' 34a1, 34c1 insulation boards 28a, 28c, as shown for example in figs. 2a and 2b. By this arrangement of the insulation boards 28a, 28c, 28d, the penetration of heat through the side portions 34a1, 34c1 into the interior of the fire protection duct is effectively blocked as the junctions of the insulation boards 28a, 28c, 28d are against the attachment surface (mounting surface, flat portion 32d) instead of being against the inner surface 18d of the side portions' 34a1, 34c1 outer shell 16d.

In one embodiment of the fire protection duct 10, the insulation boards 20a1, 28a,'20c2, 28c, included in the first insulation layer 20a1, 20c1 and in the second insulation layer 28a, 28c, 28d of the bottom member's 12 side portions 34a1, 34c1, have one end thereof installed against the inner surface 18d of the bottom member's 12 outer shell 16d serving as the fire protection duct's mounting surface 32d, and the insulation board 28d of the bottom member's 12 flat portion 32d is attached in a substantially perpendicular orientation between the insulation boards 28a, 28c of the second insulation layer 28a, 28c, 28d of the bottom member's 12 side portions 34a1, 34c1 against the inner surface thereof.

The first insulation layer 20a1, 20a2, 20b, 20c2, 20c1 of figs. 2a and 2b is composed of wool and the second insulation layer 28a, 28b, 28c, 28d of asbestos free hard gypsum board, the interstitial water of which absorbs heat to itself and which is non-combustible in keeping with fire safety regulations. The wool layer 20a1, 20a2, 20b, 20c2, 20c1 can be for example 20 mm in thickness, but its thickness may vary according to fire resistance requirement. The gypsum board 28a, 28b, 28c, 28d can be for example 13 or 15 mm in thickness, but its thickness may also vary according to the required effectiveness of fire resistance.

In one embodiment of the fire protection duct 10, the first insulation layer 20a2, 20b, 20b1, 20c1, 20a1, 20c2 consists of wool for making the fire protection duct 10 lighter.

In one embodiment of the fire protection duct 10, the bottom member's 12 second insulation layer 28a, 28c, 28d is composed of fire resistant boards, for example heat absorbing gypsum boards 28a, 28c, 28d, magnesite boards, or other suchlike boards, against which the supporting panel 24 is fastened.

In addition to the second insulation layer 28a, 28b, 28c, 28d, the junctions 30a, 30c can be protected with a separate sealing (not shown in the figures) to be mounted on the junctions 30a, 30c in a lengthwise direction thereof, for example with an ordinary combustible sealing tape, a non-combustible sealing, such as for example a fire resistant ceramic sealing tape, or with a fire seal.

By virtue of seals present at the junctions 30a, 30c, the installation of the cover member 14 on top of the bottom member 12 is facilitated as the cover member 14 remains in attachment with the bottom member 14 prior to the actual securing with fastening elements, because the cover member 14 does not become dislodged by virtue of the sealing. In addition, the sealing enables the cover member 14 to keep firmly in attachment with the bottom member 12 in such a way that the fastening element, for example a fastening screw, locates more easily a fastening hole 50 in the bottom member 12.

In view of supporting the electrical cables 22, the bottom member 12 is also fitted with a U-shaped continuous supporting panel 24, which matches the fire protection duct 10 in length and which, regarding its segments co-directional with the side portions 34a1, 34c1, is attached to the second insulation layers 28a, 28c and, regarding the flat portion 32d, to the insulation layer 28d. The supporting panel 24 can be attached to the insulation layers 28a, 28c, 28d for example by means of screws or optionally an adhesive. In its segments, the supporting panel 24 also strengthens the overall fire protection duct assembly by compressing the second insulation layers 28a, 28c, 28d against the outer shell 16d.

In one embodiment of the fire protection duct 10, the supporting panel 24 is attached surface to surface both to the flat portion 32d, 28d and to the side portions 34a1, 20a1, 28a, 34c1, 20c2, 28c and adapted for a U-shape to comply with the second insulation layer 28a, 28c, 28d.

The supporting panel 24 includes a plurality of cut-out supporting points 26 to which the electrical cables 22 can be fixed for example with cable ties or the like fastening means (not shown). The supporting points 26 are preferably protrusions with webs lifted higher up from the level of the supporting panel 24. This way, the supporting points 26 can be produced without making notches in the insulation layer.

Electrical cables 22 can be in attachment with the supporting panel 24 both on a segment of the supporting panel 24, which is co-directional with the flat portion 32d, and on segments of the supporting panel 24, which are co-directional with the side portions 34a1, 34c1. This enables a large number of supporting points 26 to be obtained and the electrical cables 22 can be supported apart from each other. By virtue of this, the internal heat of the electrical cables 22 is able to evaporate effectively away from surfaces of the electrical cables 22, making the electrical cables 22 less susceptible to overheating. By means of the supporting panel 24, the electrical cables 22 can also be bundled provided that heating thereof is not a problem. Thus, this enables a further enhancement of space utilization in the fire protection duct 10.

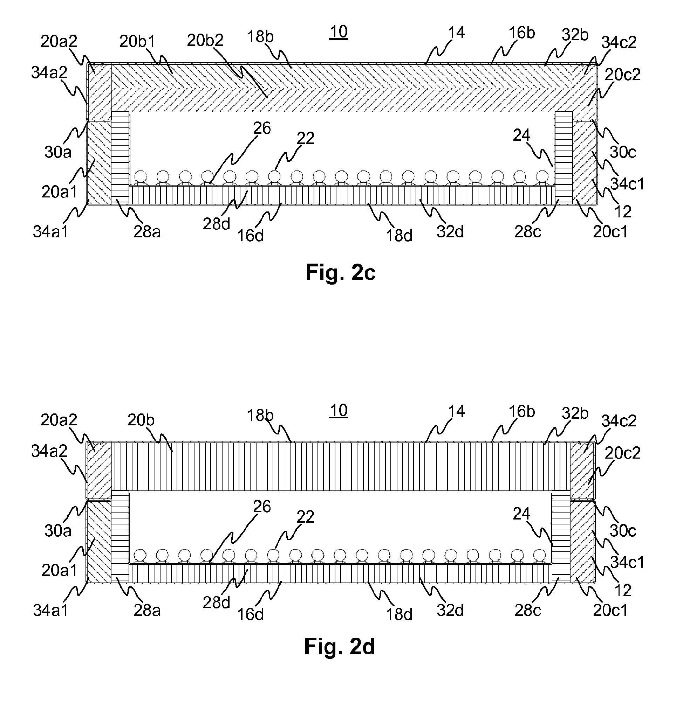

Figs. 2c and 2d show other embodiments of the fire protection duct 10 in cross-sectional views. In fig. 2d, the second insulation layer 28a, 20b2, 28c, 28d comprises an insulation board 20b2, which is attached to a first insulation board 20b1 of the first insulation layer 20a1, 20a2, 20b1, 20c1, 20c2 and which, as opposed to figs. 2a and 2b, consists of wool which is lighter than gypsum. In fig. 2d, the cover member 14 does not have the second insulation layer 20b2, 28b, but the insulation board 20b of the first insulation layer 20a2, 20b, 20c2 is constituted for example by a wool layer 35 mm in thickness.

In one embodiment of the fire protection duct 10, the cover member 14 has its second insulation layer 20b2, 28b composed of wool 20b2 or gypsum board 28b, Alternatively, the second insulation layer 20b2, 28b can be composed of fireboard.

Fig. 3 shows a supporting panel 24 attached to the bottom member 12 of the fire protection duct 10. The outer shell 16d deflects onto a free flank 36a1, 36c1 of the side portion 34a1, 34c1. Preferably in the bottom member 12, the outer shell 16d, which has been bent on top of the free flank 36a1, 36c1, has a groove 38, which extends in a lengthwise direction of the fire protection duct 10 and which has fastening holes 50 for securing the cover member 14, and in which can be placed a seal. In addition, the groove 38 has a function of preventing the "uncorking" of the cover member's 14 fastening elements by means of its curving flat surface. The outer shell 16b present on top of a respective free flank 36a2, 36c2 of the cover member 14 can be formed with oval-shaped apertures for fastening elements. It is also clearly visible in fig. 3 how the supporting points 26 can be clustered in the flat portion 32d and in the side portions 34a1, 34c1.

The fire protection duct 10 is excellent in terms of space utilization regarding the installation of electrical cables 22. In addition, the fire protection duct 10 is easy to open also afterwards, making also the electrical cables 22 easy to retrofit and/or repair.

The fire protection duct 10 is particularly useful in indoor spaces, for example in the indoor spaces of residential buildings or public buildings, wherein the neat and intact outer shell of the fire protection duct 10 enables the attainment of a visually first-rate end result.

Described above are just a few exemplary embodiments of the invention. The principle according to the invention can naturally be varied within the scope of protection defined by the claims, regarding for example implementation details as well as fields of use.

## Claims

1. A fire protection duct (10) for electrical cables (22), said fire protection duct (10) comprising
a bottom member (12) and a cover member (14), both including an outer shell (16b, 16d) and a first insulation layer (20a2, 20b, 20b1, 20c1, 20a1, 20c2) adapted against an inner surface (18b, 18d) of the outer shell (16b, 16d) for isolating the electrical cables (22) to be installed inside the fire protection duct (10) from heat generated by a possible fire, said at least bottom member (12) including a flat portion (32d, 28d) and side portions (34a1, 20a1, 28a, 34c1, 20c2, 28c),
a supporting panel (24), which is fixed inside the fire protection duct (10) and which comprises a plurality of supporting points (26) for securing the electrical cables (22), and
a second insulation layer (28a, 20b2, 28b, 28c, 28d), which is included inside the fire protection ducts (10) and which is adapted to be installed on top of a junction (30a, 30c) between the bottom member (12) and the cover member (14) inside the fire protection duct (10) for insulating the junction (30a, 30c) of the bottom member (12) and the cover member (14),
**characterized in that**
the supporting panel 824) comprises at least one deflected plate, which makes up the fire protection duct's (10) flat portion (32d, 28d) and a supporting panel surface continuous at least partially over the inner surfaces of the side portions (34a1, 20a1, 28a, 34c1, 20c2, 28c) for strengthening the fire protection duct (10).

2. A fire protection duct (10) according to claim 1, wherein the supporting panel (24) is surface-to-surface attached both to the flat portion (32d, 28d) and to the side portions (34a1, 20a1, 28a, 34c1, 20c2, 28c) and adapted for a U-shape to comply with the second insulation layer (28a, 28c, 28d).

3. A fire protection duct (10) according to any of the preceding claims, wherein the bottom member's (12) second insulation layer (28a, 28c, 28d) is composed of gypsum boards (28a, 28c, 28d), which absorb heat and against which the supporting panel (24) is attached.

4. A fire protection duct (10) according to any of the preceding claims, wherein the first insulation layer (20a2, 20b, 20b1, 20c1, 20a1, 20c2) consists of wool for making the fire protection duct (10) lighter.

5. A fire protection duct (10) according to any of the preceding claims, wherein the cover member's (14) second insulation layer (20b2, 28b) is composed of wool (20b2) or gypsum board (28b).

6. A fire protection duct (10) according to any of the preceding claims, wherein insulation boards (20a1, 28a, 20c2, 28c), included in the first insulation layer (20a1, 20c1) and in the second insulation layer (28a, 28c, 28d) of the bottom member's (12) side portions (34a1, 34c1), have one end thereof installed against an inner surface (18d) of the bottom member's (12) outer shell (16d) serving as the fire protection duct's mounting surface (32d), and an insulation board (28d) of the bottom member's (12) flat portion (32d) is attached in a substantially perpendicular orientation between the insulation boards (28a, 28c) of the second insulation layer (28a, 28c, 28d) of the bottom member's (12) side portions (34a1, 34c1) against the inner surface thereof.

7. A fire protection duct (10) according to any of the preceding claims, wherein insulation boards (20a2, 20c2), included in the first insulation layer (20a2, 20b, 20b1, 20c2) of the cover member's (14) side portions (34a2, 34c2), have one end thereof installed against an inner surface (18b) of the cover member's (14) outer shell (16b) serving as the fire protection duct's outer surface (32b), and at least one insulation board (20b, 20b1, 20b2, 28b) of the cover member's (12) flat portion (32b) is attached in a substantially perpendicular orientation between the insulation boards (20a2, 20c2) of the first insulation layer (20a2, 20b, 20b1, 20c2) of the cover member's (14) side portions (34a2, 34c2) against the inner surface thereof.
